# EUROPÄISCHE PATENTANMELDUNG

(11) **EP 3 021 254 A1**
(43) Veröffentlichungstag der Anmeldung: **18.05.2016**
(21) Anmeldenummer: 15003179.7
(22) Anmeldetag: 05.11.2015
(51) Int. Cl.: G06F 21/86, G06F 21/87, H04L 9/08

(54) **VERFAHREN ZUM SCHUTZ VOR UNZULÄSSIGEN ZUGRIFF**

(30) Priorität: 11.11.2014 DE 102014016644
(71) Anmelder: Giesecke & Devrient GmbH, 81677 München (DE)
(72) Erfinder: Martini, Ullrich, 81669 München (DE); Albrecht, Andreas, 80636 München (DE)

(57) **Zusammenfassung**

Die vorliegende Erfindung offenbart ein Verfahren zur Erzeugung eines Schlüssels zur Ver- und Entschlüsselung von Daten einer Datenverarbeitungseinheit 8, welche zumindest einen Prozessor, mindestens eine Schnittstelle und mindestens einen Speicher umfasst, wobei die Datenverarbeitungseinheit 8 ferner eine Schutzeinrichtung 4, 6 umfasst, wobei die Schutzeinrichtung 4, 6 die Datenverarbeitungseinheit 8 vor einem unerlaubten Zugriff von außen schützt, wobei sich das Verfahren insbesondere dadurch auszeichnet, dass die Schutzeinrichtung 4, 6 ein Signal an die Datenverarbeitungseinheit 8 sendet, wobei sich das Signal bei einem unerlaubten Zugriff von außen sofort und unumkehrbar verändert, wobei nur dann, wenn kein unerlaubter Zugriff stattgefunden hat, aus dem Signal der Schutzeinrichtung 4, 6 ein Schlüssel berechnet werden kann, der zur Ver- und Entschlüsselung von Daten der Datenverarbeitungseinheit 8 verwendet wird.

## Beschreibung

Die Erfindung beschreibt ein Verfahren zum Schutz einer Datenverarbeitungseinheit vor unzulässigen Zugriff.

Aus dem Stand der Technik sind zum Schutz vor unzulässigen Zugriff z.B. Manipulationsschutzfolien oder Physical Uncloneable Functions bekannt.

Problematisch ist, dass bei Daten, die z.B. aus Manipulationsschutzfolien ausgelesen werden, zur Korrektur von Fehlern sogenannte Fehlerkorrekturdaten verwendet werden. Diese Fehlerkorrekturdaten haben insbesondere den Nachteil, dass diese Informationen über den korrekten Wert enthalten und können daher einen Angriff oder einen unzulässigen Zugriff erleichtern, wenn ein Angreifer diese Informationen aus den Fehlerkorrekturdaten ausliest.

Ausgehend vom Stand der Technik ist es Aufgabe der Erfindung eine Lösung zu finden, welche die beschriebenen Nachteile vermeidet.

Die Aufgabe der Erfindung wird durch den unabhängigen Anspruch gelöst. Vorteilhafte Ausführungen sind in den abhängigen Ansprüchen beschrieben.

Die Aufgabe der Erfindung wird durch ein Verfahren zur Erzeugung eines Schlüssels zur Ver- und Entschlüsselung von Daten einer Datenverarbeitungseinheit gelöst, welche zumindest einen Prozessor, mindestens eine Schnittstelle und mindestens einen Speicher umfasst, wobei die Datenverarbeitungseinheit ferner eine Schutzeinrichtung umfasst, wobei die Schutzeinrichtung die Datenverarbeitungseinheit vor einem unerlaubten Zugriff von außen schützt, welche sich dadurch auszeichnet, dass die Schutzeinrichtung ein Signal an die Datenverarbeitungseinheit sendet, wobei sich das Signal bei einem unerlaubten Zugriff von außen sofort und unumkehrbar verändert, wobei nur dann, wenn kein unerlaubter Zugriff stattgefunden hat, aus dem Signal der Schutzeinrichtung ein Schlüssel berechnet werden kann, der zur Ver- und Entschlüsselung von Daten der Datenverarbeitungseinheit verwendet wird.

Der Vorteil der Erfindung ist, dass die Daten der Datenverarbeitungseinheit nur dann ent- und/ oder verschlüsselt werden können, wenn die Schutzeinrichtung die korrekten Daten ausgibt. Die Schutzeinrichtung gibt nur dann die korrekten Daten aus, wenn sie von außen nicht angegriffen wurde. Bei einem Angriff werden die ausgegebenen Daten der Schutzeinrichtung sofort und unumkehrbar verändert, so dass die Daten der Datenverarbeitungseinrichtung nicht mehr ent- und/ oder verschlüsselt werden können und somit die Daten, die verschlüsselt sind, in der Datenverarbeitungseinrichtung vor unberechtigten Zugriff von außen geschützt sind. Der große Vorteil der Erfindung ist, dass ein unerlaubter Zugriff auch im stromlosen Zustand der Datenverarbeitungseinheit sofort beim ersten Einschalten nach dem unerlaubten Zugriff erkannt wird und ein unerlaubter Zugriff auf Daten in der Datenverarbeitungseinheit zuverlässig verhindert wird, weil die in der Datenverarbeitungseinheit verschlüsselt abgespeicherten Daten nicht mehr entschlüsselt werden können.

Die erfindungsgemäße Datenverarbeitungseinheit mit Schutzeinrichtung kann in einer Vielzahl von Geräten eingesetzt werden, z.B. in einer Chipkarte, einem Mobiltelefon, einem Terminal für Geldtransfers, etc.

Ein vorteilhaftes Ausführungsbeispiel ist, dass in der Datenverarbeitungseinheit zumindest ein Teil des von der Schutzeinrichtung ausgegebenen Signals gespeichert wird, welches dem Zustand entspricht, wenn kein unerlaubter Zugriff von außen stattgefunden hat.

Wenn die Datenverarbeitungseinheit und die Schutzeinrichtung fertig produziert sind, wird mindestens einmal, vorzugsweise mehrmals, von der Schutzeinrichtung ein Signal an die Datenverarbeitungseinheit übertragen, welches den Zustand anzeigt, dass kein unerlaubter Zugriff stattgefunden hat. Aus den Signalen werden jeweils Datensätze erzeugt und in der Datenverarbeitungseinheit abgespeichert. Dabei wird für jedes Signal die Abweichung zu den anderen Signalen berechnet, um ein Mass für eine zulässige Abweichung zu erhalten. In Kenntnis der zulässigen Abweichung und eines Algorithmus zum Ausgleich einer zulässigen Abweichung werden Korrekturdaten erzeugt und in der Datenverarbeitungseinheit abgespeichert. Nach Durchführung dieser Prozedur, die vorzugsweise beim Hersteller durchgeführt wird, kann die erfindungsgemäße Datenverarbeitungseinheit mit Schutzeinrichtung im Feld eingesetzt werden und ist für den Betrieb bereit.

Der Vorteil ist, dass mittels des in der Datenverarbeitungseinheit gespeicherten Signals der Schutzeinrichtung die Datenverarbeitungseinheit beurteilen kann, ob es sich bei dem von der Schutzeinrichtung erhaltenen Signal um einen Zustand handelt, bei dem ein unerlaubter Zugriff von außen stattgefuden hat. Dazu vergleicht die Datenverarbeitungseinheit das gespeicherte Signal mit dem empfangenen Signal und kann damit beurteilen, ob ein unerlaubter Zugriff vorliegt. Zur Beurteilung, ob ein unzulässiger Zugriff vorliegt, reicht es auch aus, wenn zumindest ein Teil des Signals der Schutzeinrichtung in der Datenverarbeitungseinheit abgespeichert wird.

Ein weiteres vorteilhaftes Ausführungsbeispiel ist, dass die Datenverarbeitungseinheit das von der Schutzeinrichtung gespeicherte Signal mit dem empfangenen Signal vergleicht, um festzustellen, ob ein unerlaubter Zugriff stattgefunden hat.

Ein weiteres vorteilhaftes Ausführungsbeispiel ist, dass in der Datenverarbeitungseinheit Daten gespeichert sind, um eine erlaubte Abweichung im empfangenen Signal von der Schutzeinrichtung zu korrigieren.

Der Vorteil ist, dass erlaubte Abweichungen des Signals der Schutzeinrichtung, die bei jedem Signal innerhalb einer zulässigen Abweichung vorkommen, korrigiert werden können und trotz Abweichung eine Erzeugung eines Schlüssels zur Ver- und Entschlüsselung von Daten in der Datenverarbeitungseinheit möglich ist.

Ein weiteres vorteilhaftes Ausführungsbeispiel ist, dass die Datenverarbeitungseinheit die Daten zur Korrektur einer erlaubten Abweichung an die Schutzeinrichtung sendet, wenn von der Datenverarbeitungseinheit festgestellt wird, dass das von der Schutzeinrichtung empfangene Signal innerhalb der erlaubten Abweichung liegt.

Ein weiteres vorteilhaftes Ausführungsbeispiel ist, dass die Schutzeinrichtung und/ oder die Datenverarbeitungseinheit die Daten zur Korrektur einer erlaubten Abweichung auf das Signal anwendet, um daraus ein Signal ohne Abweichung zu erzeugen.

Vorteilhaft ist, dass eine erlaubte Abweichung des Signals der Schutzeinrichtung sowohl von der Schutzeinrichtung als auch von der Datenverarbeitungseinheit korrigiert werden können.

Ein weiteres vorteilhaftes Ausführungsbeispiel ist, dass der Schlüssel zur Ver- und Entschlüsselung von Daten der Datenverarbeitungseinheit aus dem Signal ohne erlaubte Abweichung berechnet wird.

Ein weiteres vorteilhaftes Ausführungsbeispiel ist, dass der Schlüssel von der Schutzeinrichtung und/ oder von der Datenverarbeitungseinheit berechnet wird.

Ein weiteres vorteilhaftes Ausführungsbeispiel ist, dass zur Berechnung des Schlüssels ein AES-Algorithmus verwendet wird.

Der Vorteil des AES-Algorithmus ist, dass jeder Zufallswert möglich ist. Man kann z.B. die Daten auf eine gewünschte Länge von z.B. 256 Bit hashen und ein Ergebnis einer Hashfunktion direkt als Schlüssel verwenden.

Zur Berechnung des Schlüssels können auch alle anderen geeigneten Algorithmen verwendet werden. Prinzipiell ist sowohl eine symmetrische als auch eine asymmetrische Verschlüsselung möglich.

Ein weiteres vorteilhaftes Ausführungsbeispiel ist, dass die Schutzeinrichtung eine Manipulationsschutzfolie und einen Prozessor umfasst.

Ein weiteres vorteilhaftes Ausführungsbeispiel ist, dass elektrische Eigenschaften der Manipulationsschutzfolie vom Prozessor der Schutzeinrichtung ausgelesen werden, um einen unerlaubten Zugriff festzustellen, wobei sich die elektrischen Eigenschaften bei einem unerlaubten Zugriff sofort und un-umkehrbar ändern.

Der Vorteil der Manipulationsschutzfolie ist, dass wenn bei einem unerlaubten Zugriff von außen die Manipulationsschutzfolie z.B. durch ein Loch beschädigt wird, dann wird dies vom Prozessor der Schutzeinrichtung erkannt. Die Folge ist, dass sich sofort und unumkehrbar mit der Beschädigung, hier z.B. das Loch, das Signal der Schutzeinrichtung an die Datenverarbeitungseinheit dauerhaft ändert, so dass die Datenverarbeitungseinheit den unerlaubten Zugriff sofort erkennt. Nachdem sich das Signal der Schutzeinrichtung geändert hat, sind die Daten in der Datenverarbeitungseinheit, welche verschlüsselt sind, nicht mehr zu entschlüsseln und damit vor unerlaubten Zugriff geschützt.

Ein weiteres vorteilhaftes Ausführungsbeispiel ist, dass die elektrischen Eigenschaften von der geometrischen Lage der Manipulationsschutzfolie abhängen.

In die geometrische Lage der Manipulationsschutzfolie gehen alle Veränderungen und/ oder Beschädigungen der Manipulationsschutzfolie ein, wie z.B. Löcher, die durch einen unerlaubten Zugriff auf die Datenverarbeitungseinheit entstanden sind.

Ein weiteres vorteilhaftes Ausführungsbeispiel ist, dass als elektrische Eigenschaften der Manipulationsschutzfolie eine Kapazität zwischen mindestens zwei Leiterbahnen und/ oder eine Induktivität von mindestens einer Leiterschleife verwendet werden.

Die Manipulationsschutzfolie weist dazu mindestens zwei Leiter und/ oder mindestens eine Leiterschleife auf, damit eine Kapazität zwischen den Leitern und/ oder eine Induktivität der Leiterschleife gemessen wird. Alternativ können auch ohmsche Widerstände oder andere geeignete Sensoren verwendet werden, die in der Manipulationsschutzfolie integriert werden können und zur Abfrage der geometrischen Lage der Manipulationsschutzfolie geeignet sind.

Im Folgenden wird ein Ausführungsbeispiel der Erfindung anhand der beigefügten Figur beschrieben.
Figur 1 zeigt ein Ausführungsbeispiel, wie die Erfindung in einem Gerät realisiert werden könnte.
Figur 2 zeigt den Ablauf der Kommunikation zwischen der Schutzeinrichtung und der Datenverarbeitungseinheit.

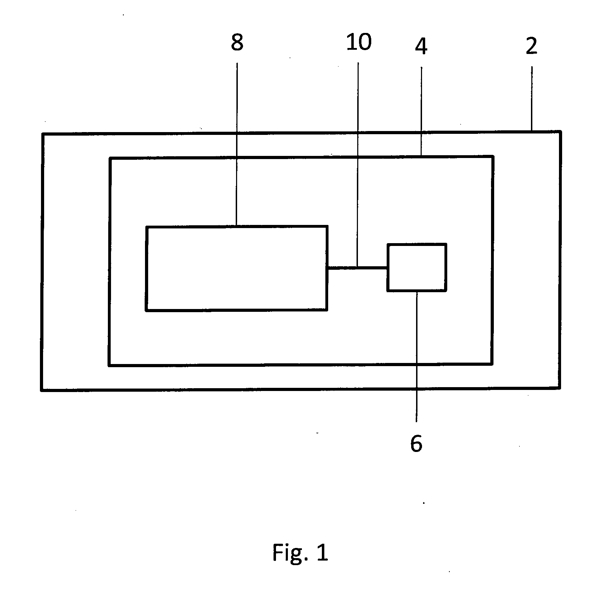

In Figur 1 ist beispielsweise auf einer Leiterplatte 2 mit gedruckten Leiterbahnen eine Datenverarbeitungseinheit 8 und eine Schutzeinheit angeordnet, wobei die Schutzeinheit aus einer Manipulationsschutzfolie 4 und einem Prozessor 6 der Manipulationsschutzfolie 4 besteht, wobei der Prozessor 6 aus der Manipulationsschutzfolie 4 Daten ausliest. Die Datenverarbeitungseinheit 8 ist mit dem Prozessor 6 über eine Verbindung 10 elektrisch leitend verbunden, um Signale in beide Richtungen zu übertragen. Die Manipulationsschutzfolie 4 ist über der Datenverarbeitungseinheit 8 und dem Prozessor 6 der Manipulationsschutzfolie 4 angeordnet. Alternativ kann die Manipulationsschutzfolie 4 zusätzlich auch auf der gegenüberliegenden Seite der Leiterplatte 2 angeordnet sein. Ferner kann die Manipulationsschutzfolie 4 auch im Aufbau der Datenverarbeitungseinheit 8 integriert sein. Bei der Datenverarbeitungseinheit 8 kann es sich um jegliche zu schützende elektronische Baugruppen und Schaltungen handeln, wie z.B. Prozessoren, Speicher, etc.. Der Prozessor 6 kann ein handelsüblicher Prozessor sein oder beispielsweise auch ein sogenannter ASIC. Darüberhinaus kann mittels der Manipulationsschutzfolie 4 auch alle andere Elektronik vor einem unzulässigen Zugriff geschützt werden.

Bei einem unzulässigen Angriff von außen auf die Datenverarbeitungseinheit 8 oder den Prozessor 6 muss die Manipulationsfolie 4 beschädigt werden, z.B. indem ein Loch in die Manipulationsfolie 4 eingebracht werden. Diese Beschädigung wird durch den Prozessor 6, der mit der Manipulationsfolie 4 elektrisch leitend verbunden ist, erkannt, weil sich mit der Beschädigung sofort und und unumkehrbar die von der Manipulationsfolie 4 ausgelesenen Daten, z.B. Kapazitäten zwischen mindestens zwei Leiterbahnen oder Induktivitäten mindestens einer Leiterspule oder ohmsche Werte einer Leiterbahn, etc., verändern. Mit der Veränderung der aus der Manipulationsfolie 4 ausgelesenen Daten kann aber nicht mehr der Schlüssel erzeugt werden, welcher zur Entschlüsselung der in der Datenverarbeitungseinheit 8 abgespeicherten Daten notwendig ist. Somit sind die Daten in der Datenverarbeitungseinheit 8 vor einem unzulässigen Zugriff geschützt.

Das in Figur 1 dargestellte Beispiel kann z.B. in einem tragbaren Datenträger, wie z.B. einer SIM-Karte, Chipkarte, Kreditkarte, Sozialversicherungsausweis, Personalausweis etc. integriert sein. Ferner kann das in Figur 1 dargestellte Beispiel auch in einem Gerät integriert sein, wie z.B. in einem Mobiltelefon, einem Terminal für Finanztransaktionen oder in einem anderen Gerät, das besonders gegen unzulässige Zugriffe von außen auf z.B. die Datenverarbeitungseinheit und die darin gespeicherten Daten geschützt werden soll.

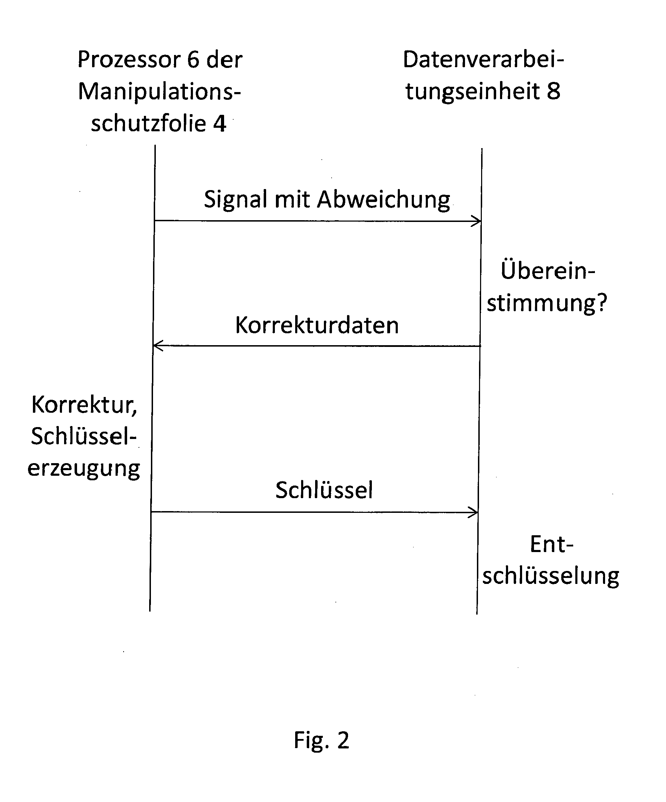

Figur 2 zeigt ein erfindungsgemäßes Ausführungsbeispiel für einen Ablauf der Kommunikation zwischen der Schutzeinrichtung, insbesondere dem Prozessor 6 und der Datenverarbeitungseinheit 8.

Der Prozessor 6 liest aus der Manipulationsschutzfolie 4, wie oben beschrieben, z.B. Kapazitäten zwischen Leiterbahnen aus, indem z.B. vom Prozessor 6 eine Spannung an entsprechende Anschlüsse der Manipulationsschutzfolie 4 angelegt wird, wobei die Anschlüsse aus Gründen der Übersichtlichkeit nicht dargestellt sind. Bei einem unzulässigen Zugriff, z.B. indem ein Loch in der Manipulationsschutzfolie 4 erzeugt wird, verändern sich die vom Prozessor 6 ausgelesenen Werte bzw. Daten sofort und unumkehrbar.

In Figur 2 ist der Zustand dargestellt, in dem kein unzulässiger Zugriff stattfindet. Der Prozessor 6 erzeugt somit aus den Werten, die aus der Manipulationsschutzfolie 4 ausgelesen wurden, ein Signal mit entsprechenden Daten und überträgt dieses an die Datenverarbeitungseinheit 8. Das Signal enthält dabei wie jedes physikalische Signal gewisse Abweichungen, die z.B. durch Rauschen entstehen. Die Datenverarbeitungseinheit 8 empfängt das Signal mit Abweichungen und vergleicht das Signal zumindest teilweise mit einem abgespeicherten Signal auf Übereinstimmung. Das abgespeicherte Signal stammt aus der Herstellung, wo vor der Auslieferung zumindest einmal, idealerweise mehrmals das Signal ermittelt wird, wenn kein unzulässiger Angriff stattfindet. Es wird in der Herstellung auch die zulässige Abweichung festgelegt und in Abhängigkeit von der zulässigen Abweichung und einem im Prozessor 6 und/ oder in der Datenverarbeitungseinheit 8 verwendeten Korrekturalgorithmus werden entsprechende Korrekturdaten bestimmt. Diese Korrekturdaten werden von der Datenverarbeitungseinheit 8 wegen einer positiven Übereinstimmung an den Prozessor 6 übertragen. Der Prozessor 6 wendet die Korrekturdaten auf die Daten des Signals mit Abweichung an und bestimmt eine Signal ohne Abweichung bzw. die entsprechenden Daten. Aus dem Signal ohne Abweichung bzw. den entsprechenden Daten wird mittels eines Verschlüsselungsalgorithmus, z.B. ein AES-Algorithmus, ein Schlüssel berechnet und an die Datenverarbeitungseinheit 8 übertragen. Die Datenverarbeitungseinheit 8 wendet den empfangenen Schlüssel auf die gespeicherten Daten an und entschlüsselt damit die in der Datenverarbeitungseinheit gespeicherten Daten.

### Bezugszeichenliste

- 2: Leiterplatte
- 4: Manipulationsschutzfolie
- 6: Prozessor der Manipulationsschutzfolie
- 8: Datenverarbeitungseinheit
- 10: Verbindung zwischen Prozessor der Manipulationsschutzfolie und Datenverarbeitungseinheit

## Patentansprüche

1. Verfahren zur Erzeugung eines Schlüssels zur Ver- und Entschlüsselung von Daten einer Datenverarbeitungseinheit (8), welche zumindest einen Prozessor, mindestens eine Schnittstelle und mindestens einen Speicher umfasst,
wobei die Datenverarbeitungseinheit (8) ferner eine Schutzeinrichtung (4, 6) umfasst,
wobei die Schutzeinrichtung (4, 6) die Datenverarbeitungseinheit (8) vor einem unerlaubten Zugriff von außen schützt,
**dadurch gekennzeichnet, dass**
die Schutzeinrichtung (4, 6) ein Signal an die Datenverarbeitungseinheit (8) sendet, wobei sich das Signal bei einem unerlaubten Zugriff von außen sofort und unumkehrbar verändert,
wobei nur dann, wenn kein unerlaubter Zugriff stattgefunden hat, aus dem Signal der Schutzeinrichtung (4, 6) ein Schlüssel berechnet werden kann, der zur Ver- und Entschlüsselung von Daten der Datenverarbeitungseinheit (8) verwendet wird.

2. Verfahren nach Anspruch 1, **dadurch gekennzeichnet, dass** in der Datenverarbeitungseinheit (8) zumindest ein Teil des von der Schutzeinrichtung (4, 6) ausgegebenen Signals gespeichert wird, welches dem Zustand entspricht, wenn kein unerlaubter Zugriff von außen stattgefunden hat.

3. Verfahren nach Anspruch 1 oder 2, **dadurch gekennzeichnet, dass** die Datenverarbeitungseinheit (8) das von der Schutzeinrichtung (4, 6) gespeicherte Signal mit dem empfangenen Signal vergleicht, um festzustellen, ob ein unerlaubter Zugriff stattgefunden hat.

4. Verfahren nach einem der vorhergehenden Ansprüche, **dadurch gekennzeichnet, dass** in der Datenverarbeitungseinheit (8) Daten gespeichert sind, um eine erlaubte Abweichung im empfangenen Signal von der Schutzeinrichtung (4, 6) zu korrigieren.

5. Verfahren nach einem der vorhergehenden Ansprüche, **dadurch gekennzeichnet, dass** die Datenverarbeitungseinheit (8) die Daten zur Korrektur einer erlaubten Abweichung an die Schutzeinrichtung (4, 6) sendet, wenn von der Datenverarbeitungseinheit (8) festgestellt wird, dass das von der Schutzeinrichtung (4, 6) empfangene Signal innerhalb der erlaubten Abweichung liegt.

6. Verfahren nach einem der vorhergehenden Ansprüche, **dadurch gekennzeichnet, dass** die Schutzeinrichtung (4, 6) und/ oder die Datenverarbeitungseinheit (8) die Daten zur Korrektur einer erlaubten Abweichung auf das Signal anwendet, um daraus ein Signal ohne Abweichung zu erzeugen.

7. Verfahren nach einem der vorhergehenden Ansprüche, **dadurch gekennzeichnet, dass** der Schlüssel zur Ver- und Entschlüsselung von Daten der Datenverarbeitungseinheit (8) aus dem Signal ohne erlaubte Abweichung berechnet wird.

8. Verfahren nach einem der vorhergehenden Ansprüche, **dadurch gekennzeichnet, dass** der Schlüssel von der Schutzeinrichtung (4, 6) und/ oder von der Datenverarbeitungseinheit (8) berechnet wird.

9. Verfahren nach einem der vorhergehenden Ansprüche, **dadurch gekennzeichnet, dass** zur Berechnung des Schlüssels ein AES-Algorithmus verwendet wird.

10. Verfahren nach einem der vorhergehenden Ansprüche, **dadurch gekennzeichnet, dass** die Schutzeinrichtung (4, 6) eine Manipulationsschutzfolie (4) und einen Prozessor (6) umfasst.

11. Verfahren nach einem der vorhergehenden Ansprüche, **dadurch gekennzeichnet, dass** elektrische Eigenschaften der Manipulationsschutzfolie (4) vom Prozessor (6) der Schutzeinrichtung (4,6) ausgelesen werden, um einen unerlaubten Zugriff festzustellen, wobei sich die elektrischen Eigenschaften bei einem unerlaubten Zugriff sofort und unumkehrbar ändern.

12. Verfahren nach einem der vorhergehenden Ansprüche, **dadurch gekennzeichnet, dass** die elektrischen Eigenschaften von der geometrischen Lage der Manipulationsschutzfolie (4) abhängen.

13. Verfahren nach einem der vorhergehenden Ansprüche, **dadurch gekennzeichent, dass** als elektrische Eigenschaften der Manipulationsschutzfolie (4) eine Kapazität zwischen mindestens zwei Leiterbahnen und/ oder eine Induktivität von mindestens einer Leiterschleife verwendet werden.
